# EUROPEAN PATENT SPECIFICATION

(11) **EP 3 045 491 B1**
(45) Date of publication and mention of the grant of the patent: **03.04.2019**
(21) Application number: 16460003.3
(22) Date of filing: 15.01.2016
(51) Int. Cl.: C08J 9/35, B29B 17/04, C08J 9/00, C08J 9/33, C08J 11/18

(54) **METHOD OF OBTAINING COMPACT EXPANDED POLYSTYRENE PLASTICS CONTAINING WASTE POLYSTYRENE**
VERFAHREN ZUM ERHALTEN VON KOMPAKTEN EXPANDIERTEN POLYSTYROLKUNSTSTOFFEN ENTHALTEND POLYSTYROLABFALL
PROCÉDÉ D'OBTENTION DE MATIÈRES PLASTIQUES À BASE DE POLYSTYRÈNE EXPANSÉES COMPACTES CONTENANT DES DÉCHETS DE POLYSTYRÈNE

(30) Priority: 16.01.2015 PL 41096815
(43) Date of publication of application: 20.07.2016
(73) Proprietor: Termo Organika SP. Z O.O., 30-117 Kraków (PL)
(72) Inventor: Zadecki, Wiestaw, 41-800 Zabrze (PL); Stachura, Dariusz, 30-241 Krakow (PL); Rams, Witold, 32-602 Oswiecim-Brzezinka (PL)
(74) Representative: Marek, Joanna

(56) References cited:
- WO-A1-2011/133035
- CA-A1- 2 171 413
- DE-A1- 4 428 200

## Description

The subject of invention is the method of obtaining compact expanded polystyrene plastics, in particular from raw material based on waste expanded polystyrene, especially hard polystyrene coming from the process of extrusion. Foamed polystyrene is present in many everyday objects. It is also widely used in many branches of industry e.g. in construction as insulation, in manufacturing of packaging, as protection layers of different applications. Its recovery and reutilization is significant both from the economical, as well as the ecological point of view. Waste from foamed polystyrene may be an addition to or completely substitute the raw material for the production of new polystyrene products.

The use of waste polystyrene with different kinds of admixtures is known from the state of the art.

An example of the use of waste polystyrene is the Korean invention KR20120051404 (A), in which construction materials were revealed to be produced from waste, flame retardant expanded polystyrene, and the method of obtaining construction materials through the method of injection or molding of the final product containing 2-8% by weight of powdered waste, flame retardant expanded polystyrene, 50-70% by weight of cement, 20-30% by weight of steelmaking sludge, 5-10% by weight of perlite, 5 -10% by weight of soap in liquid state. The method of obtaining the construction material with the use of waste, flame retardant expanded polystyrene includes the following stages: (S1) the powdering of waste, flame retardant expanded polystyrene to obtain powder, (S2) the mixing of waste, flame retardant expanded polystyrene with cement, steelmaking sludge and perlite, (S3) the obtaining of composite through mixing it with liquid soap and water, and (S4) the obtaining of a specific type of material through molding of the composite.

In the Czech description of the utility model CZ23527 (U1) a polymer plastic was revealed on the basis of recycled polystyrene, characterized by the fact that 100 kg of plastic contains 60-64 kg of granulated blast furnace slag, 3 - 3.5 kg of recycled polystyrene, 21-22 kg of modified soluble glass of silica module 1.7-2.5 and 1-14 Itr of water.

WO2011/133035 (A1) discloses a process for obtaining compact expanded polystyrene materials, employing expanded particles of polystyrene as well as ground particles of waste foamed polystyrene. No further details as to the process of grinding are given.

DE4428200 (A1) discloses a process wherein expanded particles of polystyrene or ground particles of waste foamed polystyrene are coated with a solution of a surfactant in water. The coated particles thus obtained may be used for making compact expanded polystyrene materials.

CA2171413 (A1) discloses a process for obtaining compact expanded polystyrene materials, employing expanded particles of polystyrene and ground particles of waste foamed polystyrene which are beforehand coated with a flame retardant.

There is a wide range of possibilities of application of waste foamed polystyrene, especially from waste products coming from, for example, the process of extruding, post-shipment waste, and also waste from polystyrene packaging, therefore, the need occurred to develop the method allowing for its combining with the foamed polystyrene and adhesion of the additives enhancing its properties, especially in the scope of resistance to raised temperature, but also beneficially influencing the enhancement of the mechanical parameters and unification of the structure, which would allow for the application of final products from waste foamed polystyrene as individual products.

The purpose of the invention is the development of a method of obtaining compact expanded polystyrene materials at temperature below the level at which the polymer transformation processes start, where the dominant component of the received expanded polystyrene materials would be waste foamed polystyrene, especially the hard polystyrene coming from the extruding process. The purpose of the invention is also the obtaining of a final product of limited flammability and limited propensity for dripping during thermal melting.

The essence of invention is the method of obtaining compact expanded polystyrene plastics, containing foamed polystyrene with flame retardant, foaming agent and waste foamed polystyrene, encompassing the known stages of obtaining polystyrene with the method of molding blocks, characterized in that the waste foamed polystyrene is grinded at a temperature from 0 to 70°C in the presence of water in a quantity of 1.5-30% by weight and optionally flame retardants in a quantity of 2-15 % by weight, and in the presence of surface active agents in a quantity of 0.3-10% by weight - until obtaining grinded beads in the range of 0.5-30 mm, where the quantity of particular components is given in relation to the quantity of waste foamed polystyrene, and next, after drying the grinded, optionally flame retardant, waste foamed polystyrene, it is added to the foamed polystyrene in a quantity of 1-80 % by weight in relation to the foamed polystyrene.

Preferably, the waste foamed polystyrene is hard waste polystyrene coming from the extruding process.

Preferably, the flame retardant in the waste foamed polystyrene is methyl sulfonic acid.

Preferably, the flame retardant in the waste foamed polystyrene is ethylene glycol.

Preferably, the flame retardant in the waste foamed polystyrene is ammonium bromide.

Preferably, the flame retardant in the waste foamed polystyrene is the ammonium salt of sulfamic acid.

Preferably, the surface active agent is a water dispersion of the alkyl amine oxide.

Preferably, according to the invention, the weight ratio between the foamed polystyrene and the waste foamed polystyrene is 50%.

Optionally, the flame retardants used in the method according to the invention are also present in both foamed polystyrene, as well as possible to be used in foamed waste polystyrene, are known from the state of art and are, for example, a mixture of ammonium bromide with guanidine phosphate and monoammonium salt of sulfamic acid in the presence of ascorbic acid.

The grinding of the foamed, waste polystyrene, is preferably the dendritic, impact and friction grinding of foamed waste polystyrene in the form of blocks or large pieces up to the size of 5-300 mm in the presence of cooling agent in the form of water and surface active agent, during which optionally the flame retardant is applied onto the grinded foamed waste polystyrene, as a result obtaining the granulate of dimensions of 0.5-30 mm ready for molding blocks with the method known from foamed polystyrene.

So far, the grinding of waste polystyrene involved the raise of temperature above the level at which the process of polystyrene transformation starts. This also involved the adverse transformations taking place on the surface of polystyrene, which resulted in the deterioration of the adhesion to the foamed polystyrene or different types of modifiers, e.g. flame retardants.

It was unexpectedly found that introduction of water dispersion of the surface active agent with the addition of flame retardants in the form of spraying directly on to the units of preliminary crushed, waste, non-modified (not flame retardant) polystyrene, regulates the coefficient of friction of grinded, waste polystyrene in the scope of electrostatic neutralization and surface hydrophilicity.

Through the evaporation of water coming from the water dispersion of surface active agent, the temperature generated during the grinding of waste polystyrene was decreased and maintained at the level of ambient temperature, so below the temperature of polystyrene glass transition. As a result of the above, the obtained granulate maintains the surface capable of adhesion of modifying agents, e.g. flame retardant, and also obtains adhesive affinity with the foamed polystyrene material during the molding of blocks of the input material, as a result producing the final material of physical and mechanical properties of a material which does not contain waste polystyrene in its mass.

Direct contact of specially chosen surface active agents and flame retardants with the surface of the tribological node in the module of the grinding machine allows for uniform dissipation of heat generated on the surface of the waste polystyrene, its neutralization and penetration of active components of flame retardants and adhesion stabilizing agents of grinded waste polystyrene during the molding of blocks, constituting the final phase of forming modified, foamed, waste polystyrene containing flame retardants and necessary additives, which determine the quality and wear resistance of the manufactured polystyrene intended for thermal insulation in construction industry.

The addition of the surface active agents during the grinding of foamed waste polystyrene results in the neutralization of electrostatic and surface charges, decreasing of the surface tension, which reduces the thermal melting of grains - geometric elements after grinding and during grinding.

During impact and friction grinding of foamed waste polystyrene the surface diffusion of flame retardants takes place, which causes the increase of the oxygen index of the generated grinded granules, intended for application in the method according to the invention.

It was unexpectedly found that the addition of flame retardant, foamed and grinded waste polystyrene, increases the oxygen index of the final product, which limits its flammability and the quantity of generated heat.

The subject according to the invention was presented more in detail in the preferable examples of production, however, not limiting its scope.

### Example 1

To a low-speed grinder of the working capacity of 250 liters, a batch of waste polystyrene is continuously fed, within limits 1.5 - 3 kg, with a simultaneous spraying of the mixture of a surface active agent in the form of a water dispersion of alkyl amine oxide of 21% water content in relation to alkyl amine oxide - in the quantity of 35 grams per 1 kilo of waste polystyrene, and next, the waste polystyrene is grinded until obtaining granulate of dimensions in the range of 0.5 to 30 mm.

The grinding takes place at room temperature.

After drying of the grinded, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

### Example 2

To a low-speed grinder of the working capacity of 250 liters, a batch of waste polystyrene is continuously fed, within limits 1.5 - 3 kg, with a simultaneous spraying of the mixture of a surface active agent in a form of a water dispersion of alkyl amine oxide of 21% water content in relation to alkyl amine oxide - in the quantity of 15 grams per 1 kilo of waste polystyrene and methyl sulfonic acid in the quantity of 45 grams per 1 kilo of waste expanded polystyrene and next, the waste polystyrene is grinded until obtaining granulate of dimensions in the range of 0.5 to 30 mm.

The grinding takes place at room temperature.

After drying of the grinded, flame retardant, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

### Example 3

To a low-speed grinder of the working capacity of 250 liters, a batch of waste polystyrene is continuously fed within limits 1.5 - 3 kg with a simultaneous spraying of the mixture of a surface active agent in a form of a water dispersion of alkyl amine oxide of 21% water content in relation to alkyl amine oxide - in the quantity of 30 grams per 1 kilo of waste polystyrene and ammonium salt of sulfamic acid in the quantity of 70 grams per 1 kilo of waste expanded polystyrene and next, the waste polystyrene is grinded until obtaining granulate of dimensions in the range of 0.5 to 30 mm.

The grinding takes place at temperature between 35 - 40°C.

After drying of the grinded, flame retardant, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

### Example 4

To a low-speed grinder of the working capacity of 250 liters, a batch of waste polystyrene is continuously fed within limits 1.5 - 3 kg with a simultaneous spraying of the mixture of a surface active agent in a form of a water dispersion of alkyl amine oxide of 21% water content in relation to alkyl amine oxide - in the quantity of 40 grams per 1 kilo of waste polystyrene and ethylene glycol in the quantity of 35 grams per 1 kilo of waste expanded polystyrene and next, the waste polystyrene is grinded until obtaining granulate of dimensions in the range of 0.5 to 30 mm.

The grinding takes place at temperature between 30 - 35°C.

After drying of the grinded, flame retardant, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

### Example 5

To a low-speed grinder of the working capacity of 250 liters, a batch of waste polystyrene is continuously fed within limits 1.5 - 3 kg with a simultaneous spraying of the mixture of a surface active agent in a form of a water dispersion of alkyl amine oxide of 21% water content in relation to alkyl amine oxide - in the quantity of 15 grams per 1 kilo of waste polystyrene and methylphosphonic acid in the quantity of 55 grams per 1 kilo of waste expanded polystyrene and next, the waste polystyrene is grinded until obtaining granulate of dimensions in the range of 0.5 to 30 mm.

The grinding takes place at room temperature.

After drying of the grinded, flame retardant, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

### Example 6

To a low-speed grinder of the working capacity of 250 liters, a batch of waste polystyrene is continuously fed within limits 1.5 - 3 kg with a simultaneous spraying of the mixture of a surface active agent in a form of a water dispersion of alkyl amine oxide of 21% water content in relation to alkyl amine oxide - in the quantity of 15 grams per 1 kilo of waste polystyrene and guanidine phosphate in the quantity of 24 grams per 1 kilo of waste polystyrene, and monoammonium salt of sulfamic acid in the amount of 27 gram per 1 kilo of waste expanded polystyrene, in the presence of ascorbic acid in the amount of 10 grams per 1 kilo of waste expanded polystyrene, and next, the waste polystyrene is grinded until obtaining granulate of dimensions in the range of 0.5 to 30 mm.

The grinding takes place at room temperature.

After drying of the grinded, flame retardant, waste polystyrene in the quantity of 60 kg, during the pneumatic transport before the entry of foamed and seasonal styrene polymer to the mold chamber, 40 kg of foamed polystyrene is fed.

Next, the plastic is molded into blocks, where after consolidation in the presence of water vapor of temperature of 105°C, the ready, modified according to the invention, plastic in the form of a block expanded polystyrene is obtained.

## Claims

1. A The method of obtaining compact expanded polystyrene materials containing foamed polystyrene with flame retardant, foaming agent and waste foamed polystyrene, encompassing the known stages of obtaining polystyrene with the method of molding blocks wherein the waste foamed polystyrene is grinded at a temperature of 0 to 70°C in the presence of water in a quantity of 1.5-30% by weight and optionally flame retardants in a quantity of 2-15 % by weight, and in the presence of surface active agents in a quantity of 0.3-10% by weight - until obtaining grinded beads in the range of 0.5-30 mm, where the quantity of particular components is given in relation to the quantity of waste foamed polystyrene, and next, after drying, the optionally flame retardant, waste foamed polystyrene is added to the foamed polystyrene in a quantity of 1-80 % by weight in relation to the foamed polystyrene.

2. The method of obtaining compact expanded polystyrene plastics according to claim 1 wherein the waste foamed polystyrene is hard waste polystyrene coming from the extruding process.

3. The method of obtaining compact expanded polystyrene plastics according to claim 1 wherein the flame retardant in the waste foamed polystyrene is methyl sulfonic acid.

4. The method of obtaining compact expanded polystyrene plastics according to claim 1 wherein the flame retardant in the waste foamed polystyrene is ethylene glycol.

5. The method of obtaining compact expanded polystyrene plastics according to claim 1 wherein the flame retardant in the waste foamed polystyrene is ammonium bromide.

6. The method of obtaining compact expanded polystyrene plastics according to claim 1 wherein the flame retardant in the waste foamed polystyrene is ammonium salt of sulfamic acid.

7. The method of obtaining compact expanded polystyrene plastics according to claim 1 wherein the surface active agent is a water dispersion of alkyl amine oxide.

8. The method of obtaining compact expanded polystyrene plastics according to claim 1 wherein the weight ratio of foamed polystyrene to waste foamed polystyrene is 50%.

## Patentansprüche

1. Verfahren zur Herstellung von einheitlichen expandierten Polystyrol-Kunststoffen, aufweisend geschäumtes Polystyrol unter Zugabe von feuerhemmendem, schäumendem und geschäumtem Polystyrol-Abfall, umfassend die bekannten Etappen zur Herstellung von Polystyrol durch Blockformverfahren, bei dem geschäumter Polystyrol-Abfall bei Temperatur von 0 bis 70 °C unter Zugabe von Wasser von 1,5-30 Gew.%, eventuell feuerhemmendem Mittel von 2-15 Gew.% sowie unter Zugabe von Tensiden von 0,3-10 Gew.% gemahlen wird - bis die gemahlenen Kugeln im Bereich von 0,5-30 mm entstehen, wobei die Menge einzelner Bestandteile im Verhältnis zur Menge des geschäumten Polystyrol-Abfalls angegeben wird und anschließend dem geschäumten Polystyrol nach dem Trocknen eventuell unbrennbarer geschäumter Polystyrol-Abfall von 1-80 Gew.% im Verhältnis zum geschäumten Polystyrol zugegeben wird.

2. Verfahren zur Herstellung von einheitlichen expandierten Polystyrol-Kunststoffen nach Anspruch 1, bei dem als geschäumter Polystyrol-Abfall harter Polystyrol-Abfall gilt, der im Extrusionsverfahren hergestellt wird.

3. Verfahren zur Herstellung von einheitlichen expandierten Polystyrol-Kunststoffen nach Anspruch 1, bei dem als feuerhemmendes Mittel im geschäumten Polystyrol-Abfall Methylsulfonsäure eingesetzt wird.

4. Verfahren zur Herstellung von einheitlichen expandierten Polystyrol-Kunststoffen nach Anspruch 1, bei dem als feuerhemmendes Mittel im geschäumten Polystyrol-Abfall Ethylenglykol eingesetzt wird.

5. Verfahren zur Herstellung von einheitlichen expandierten Polystyrol-Kunststoffen nach Anspruch 1, bei dem als feuerhemmendes Mittel im geschäumten Polystyrol-Abfall Ammoniumbromid eingesetzt wird.

6. Verfahren zur Herstellung von einheitlichen expandierten Polystyrol-Kunststoffen nach Anspruch 1, bei dem als feuerhemmendes Mittel im geschäumten Polystyrol-Abfall Ammoniumsalze der Amidosulfonsäure eingesetzt werden.

7. Verfahren zur Herstellung von einheitlichen expandierten Polystyrol-Kunststoffen nach Anspruch 1, bei dem als Tensid Wasserdispersion von Alkylaminoxid eingesetzt wird.

8. Verfahren zur Herstellung von einheitlichen expandierten Polystyrol-Kunststoffen nach Anspruch 1, bei dem der Gewichtsanteil des geschäumten Polystyrols zum geschäumten Polystyrol-Abfall 50% beträgt.

## Revendications

1. Un procédé d'obtention de matériaux de polystyrène expansé compacts contenant du polystyrène moussé avec un agent moussant ignifuge et du polystyrène moussé résiduel, comprenant les étapes connues d'obtention du polystyrène avec le procédé de moulage de blocs dans lequel le polystyrène moussé résiduel est broyé à une température de 0 à 70 °C en présence d'eau en une quantité de 1,5 à 30 % en poids et éventuellement d'agents ignifuges en une quantité de 2 à 15 % en poids, et en présence d'agents tensioactifs en une quantité de 0,3 à 10 % en poids - jusqu'à obtention de billes broyées dans la plage de 0,5-30 mm, où la quantité de composants particuliers est donnée par rapport à la quantité du polystyrène moussé résiduel, et puis, après le séchage, en option le polystyrène moussé résiduel ignifuge est ajouté au polystyrène moussé en une quantité de 1 à 80 % en poids par rapport au polystyrène moussé.

2. Procédé d'obtention de matières plastiques de polystyrène expansé compactes selon la revendication 1, dans lequel le polystyrène moussé résiduel est le polystyrène résiduel dur en provenance du procédé d'extrusion.

3. Procédé d'obtention de matières plastiques de polystyrène expansé compactes selon la revendication 1, dans lequel le retardateur de flamme dans le polystyrène moussé résiduel est l'acide méthyl sulfonique.

4. Procédé d'obtention de matières plastiques de polystyrène expansé compactes selon la revendication 1, dans lequel le retardateur de flamme dans le polystyrène moussé résiduel est l'éthylène glycol.

5. Procédé d'obtention de matières plastiques de polystyrène expansé compactes selon la revendication 1, dans lequel le retardateur de flamme dans le polystyrène moussé résiduel est le bromure d'ammonium.

6. Procédé d'obtention de matières plastiques de polystyrène expansé compactes selon la revendication 1, dans lequel le retardateur de flamme dans le polystyrène moussé résiduel est le sel d'ammonium d'acide sulfamique.

7. Procédé d'obtention de matières plastiques de polystyrène expansé compactes selon la revendication 1, dans lequel l'agent tensioactif est une dispersion dans l'eau d'oxyde d'alkylamine.

8. Procédé d'obtention de matières plastiques de polystyrène expansé compactes selon la revendication 1, dans lequel le rapport pondéral du polystyrène moussé au polystyrène moussé résiduel est de 50 %.
